(19) Europäisches Patentamt
European Patent Office
Office européen des brevets

(11) **EP 4 291 589 B1**

(12) **EUROPÄISCHE PATENTSCHRIFT**

(45) Veröffentlichungstag und Bekanntmachung des Hinweises auf die Patenterteilung:
**23.10.2024 Patentblatt 2024/43**

(21) Anmeldenummer: **22708429.0**

(22) Anmeldetag: **08.02.2022**

(51) Internationale Patentklassifikation (IPC):
*C08G 18/16* $^{(2006.01)}$  *C08G 18/18* $^{(2006.01)}$
*C08G 18/24* $^{(2006.01)}$  *C08G 18/48* $^{(2006.01)}$
*C08G 18/76* $^{(2006.01)}$  *C08J 11/16* $^{(2006.01)}$
*C08J 11/24* $^{(2006.01)}$

(52) Gemeinsame Patentklassifikation (CPC):
**C08G 18/163; C08G 18/1833; C08G 18/244; C08G 18/4837; C08G 18/7621; C08J 11/16; C08J 11/24;** C08G 2110/0008; C08G 2110/005; C08G 2110/0083; C08J 2375/04; Y02W 30/62

(86) Internationale Anmeldenummer:
**PCT/EP2022/052931**

(87) Internationale Veröffentlichungsnummer:
**WO 2022/171586 (18.08.2022 Gazette 2022/33)**

(54) **VERFAHREN ZUR WIEDERGEWINNUNG VON ROHSTOFFEN AUS POLYURETHANSCHÄUMEN**

METHOD FOR THE RECOVERY OF RAW MATERIALS FROM POLYURETHANE FOAMS

PROCÉDÉ DE RÉCUPÉRATION DES MATIÈRES PREMIÈRES À PARTIR DE MOUSSES POLYURÉTHANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.02.2021 EP 21155929**
**03.09.2021 EP 21194916**

(43) Veröffentlichungstag der Anmeldung:
**20.12.2023 Patentblatt 2023/51**

(73) Patentinhaber: **Covestro Deutschland AG**
**51373 Leverkusen (DE)**

(72) Erfinder:
• **HINZMANN, Dirk**
**50259 Pulheim (DE)**
• **SCHERF, Sebastian**
**51371 Leverkusen (DE)**
• **BAECKER, Michael**
**41352 Korschenbroich (DE)**

(74) Vertreter: **Levpat**
**c/o Covestro AG**
**Gebäude K12**
**51365 Leverkusen (DE)**

(56) Entgegenhaltungen:
**EP-A2- 0 835 901 US-A- 4 336 406**
**US-A- 5 714 523**

**Beschreibung**

Die vorliegende Erfindung betrifft ein Verfahren zur Wiedergewinnung von Rohstoffen (d. h. von Polyolen und optional zusätzlich Aminen) aus Polyurethanschäumen umfassend eine Chemolyse. Die Chemolyse zeichnet sich dadurch aus, dass ein Polyurethanschaum mit einem Alkohol und Wasser in Gegenwart eines Katalysators bei einer Temperatur im Bereich von 130 °C bis 195 °C umgesetzt wird, wobei das Massenverhältnis von (insgesamt eingesetztem) Alkohol und (insgesamt eingesetztem) Wasser einerseits zu dem Polyurethanschaum andererseits [also m(Alkohol + Wasser)/m(Polyurethanschaum), mit "m" = Masse] im Bereich von 0,5 bis 2,5 liegt und wobei die Masse des Wassers 4,0 % bis 10 % der Masse des Alkohols beträgt. Der Katalysator umfasst ein Metallsalz ausgewählt aus einem Carbonat, einem Hydrogencarbonat, einem Orthophosphat, einem Mono-Hydrogen-Orthophosphat, einem Metaphosphat oder einer Mischung von zwei oder mehr der vorgenannten Metallsalze. Dabei können zunächst auch nur der Alkohol und der Katalysator mit dem Polyurethanschaum vermischt werden, während das Wasser erst nach erfolgter Auflösung des Polyurethanschaumes sukzessive zudosiert wird. Es ist auch möglich, zu Beginn der Chemolyse zusammen mit dem Alkohol und dem Katalysator einen Teil des Wassers zuzugeben und die verbleibende Menge Wasser nach erfolgter Auflösung des Polyurethanschaumes sukzessive zuzudosieren.

Polyurethanschäume finden vielfältige Anwendungen in der Industrie und im Alltag. Üblicherweise wird zwischen Polyurethanschaumen und sog. "CASE"-Produkten unterschieden, wobei "CASE" ein Sammelbegriff für Polyurethan-Beschichtungen (z. B. Lacke), *-Klebstoffe, -Dichtstoffe* und *-Elastomere* ist. Die Polyurethanschäume werden üblicherweise in Hartschäume und Weichschäume unterteilt. All diesen Produkten ist trotz ihrer Verschiedenheit die Polyurethangrundstruktur gemeinsam, die durch die Polyadditionsreaktion eines mehrwertigen Isocyanats und eines Polyols entsteht und sich beispielsweise für ein Polyurethan, das auf einem Diisocyanat **O=C=N-R-N=C=O** und einem Diol H-O-R'-O-H basiert (wobei R und R' organische Reste bezeichnen) als

$$\text{\~\~\~[O-R'-O-(O=C)-HN-R-NH-(C=O)]\~\~\~}$$

darstellen lässt.

Gerade wegen des großen wirtschaftlichen Erfolges der Polyurethanprodukte fallen auch große Mengen an Polyurethanabfall (z. B. aus alten Matratzen oder Sitzmöbeln) an, der einer sinnvollen Verwendung zugeführt werden muss. Die technisch am einfachsten umzusetzende Art der Wiederverwendung ist die Verbrennung unter Nutzung der freiwerdenden Verbrennungswärme für andere Prozesse, beispielweise industrielle Herstellprozesse. Auf diese Weise ist jedoch eine Schließung der Rohstoffkreisläufe nicht möglich. Eine andere Art der Wiederverwendung ist das sog. *"physikalische* Recycling", bei welchem Polyurethanabfälle mechanisch zerkleinert und in der Herstellung neuer Produkte eingesetzt werden. Dieser Art des Recyclings sind naturgemäß Grenzen gesetzt, weshalb es nicht an Versuchen gefehlt hat, die der Polyurethanproduktion *zugrunde liegenden Rohstoffe* durch Rückspaltung der Polyurethanbindungen wiederzugewinnen (sog. *"chemisches* Recycling"). Die zurückzugewinnenden Rohstoffe umfassen dabei in erster Linie Polyole (im obigen Beispiel also H-O-R'-O-H). Daneben können durch hydrolytische Spaltung der Urethanbindung auch Amine gewonnen werden (im obigen Beispiel also $H_2N$-R-$NH_2$), die sich nach Aufarbeitung zu Isocyanaten (im obigen Beispiel zu O=C=N-R-N=C=O) phosgenieren lassen.

Verschiedene Ansätze des chemischen Recyclings wurden in der Vergangenheit entwickelt. Die drei wichtigsten werden im Folgenden kurz zusammengefasst:

1. **Hydrolyse** von Urethanen durch Umsetzung mit Wasser unter Gewinnung von Aminen und Polyolen unter Bildung von Kohlenstoffdioxid.

2. **Glykolyse** von Urethanen durch Umsetzung mit Alkoholen, wobei die Polyole, die in den Urethangruppen eingebaut sind, durch den eingesetzten Alkohol ersetzt und auf diese Weise freigesetzt werden. Dieser Vorgang wird in der Literatur meist als *Umesterung* bezeichnet (genauer: *Umurethanisierung*). Diese Art des chemischen Recyclings wird unabhängig von der genauen Art des eingesetzten Alkohols in der Literatur üblicherweise als *Glykolyse* bezeichnet, obwohl dieser Begriff eigentlich nur für Glykol zutreffend ist. Im Zusammenhang mit der vorliegenden Erfindung wird daher allgemein von *Alkoholyse* gesprochen. An eine Glykolyse kann sich eine Hydrolyse anschließen. Wird die Hydrolyse in Gegenwart des noch unveränderten Glykolysegemisches durchgeführt, spricht man von einer

3. **Hydroglykolyse** von Urethanbindungen durch Umsetzung mit Alkoholen *und* Wasser. Es ist natürlich ebenfalls möglich, Alkohol und Wasser von Anfang an zuzugeben, wobei die oben beschriebenen Vorgänge der Glykolyse und Hydrolyse parallel ablaufen.

Eine Zusammenfassung der bekannten Verfahren des Polyurethanrecyclings bietet der Übersichtsartikel von Simón, Borreguero, Lucas und Rodríguez in Waste Management 2018, 76, 147 - 171 [1]. Als besonders bedeutsam wird dort die Glykolyse (Nr. 2 oben) herausgestellt. Bei der Glykolyse wird zwischen "zweiphasigen" und "einphasigen" Prozessführungen unterschieden, je nachdem, ob sich das erhaltene rohe Verfahrensprodukt der Umsetzung mit dem Alkohol in zwei Phasen trennt oder nicht. Ob dies der Fall ist, hängt insbesondere von der Wahl des eingesetzten Alkohols und den Verfahrensbedingungen ab (insbesondere Anteil des eingesetzten Alkohols an der Reaktionsmischung sowie auch Temperatur). In dem genannten Übersichtsartikel wird die zweiphasige Verfahrensführung unter Anwendung rohen Glycerins (etwa Abfälle aus der Herstellung von Biodiesel) favorisiert, da sie das höchste Potenzial habe, mit geringen Produktionskosten qualitativ hochwertige Produkte zurückzugewinnen (wobei der Fokus klar auf der Wiedergewinnung der Polyole liegt).

Infolge des zusätzlichen Einsatzes von Wasser ist das Verfahrensprodukt von Hydroglykolysen (Nr. 3 oben) stets zweiphasig. Braslaw und Gerlock beschreiben in Ind. Eng. Chem. Process Des. Dev. 1984, 23, 552 - 557 [2] die Aufarbeitung eines solchen Verfahrensproduktes umfassend die Abtrennung des Wassers (durch Phasentrennung im Labormaßstab oder Verdampfung im für großtechnische Anwendungen vorgeschlagenen sog. *"Ford-Hydroglykolyse-Prozess"*) und Extraktion der verbleibenden organischen Phase mit Hexadecan unter Ausbildung einer Alkoholphase, aus welcher Amin gewonnen werden kann, und einer Hexadecan-Phase, aus welcher Polyol gewonnen werden kann. Obwohl die Möglichkeit der Wiedergewinnung von Amin erwähnt wird, liegt auch in diesem Artikel der Schwerpunkt auf der Rückgewinnung von Polyolen.

Ein Patent auf einen nach diesen Prinzipien arbeitenden Prozess wurde unter der Nummer US 4,336,406 erteilt. Dort wird ein Verfahren zur Rückgewinnung von Polyetherpolyol aus einem Polyurethan beschrieben, welches darin besteht, dass man stufenweise:

(a) durch Auflösung dieses Polyurethans in einem gesättigten Alkohol mit einem Siedepunkt von 225 °C bis 280 °C bei einer Temperatur von 185 °C bis 220 °C unter einer nichtoxydierenden Atmosphäre eine Lösung bildet;

(b) diese Lösung unter dieser nichtoxydierenden Atmosphäre in Gegenwart eines Alkalihydroxyd-Katalysators mit Wasser für die erforderliche Zeit reagieren lässt, um die hydrolysierbaren Auflösungsprodukte weitgehend zu Aminen und Alkohol zu hydrolysieren, während man diese Lösung bei einer Temperatur von 175 °C bis 220 °C hält, wobei dieser Alkalihydroxyd-Katalysator der Lösung in einer Menge von mindestens 0,1 Massen-%, bezogen auf die Masse dieses Polyurethanschaums, zugesetzt wird;

(c) das nach der Hydrolyse verbleibende Wasser aus dieser Lösung unter einer nichtoxydierenden Atmosphäre entfernt;

(d) dieses Polyol unter einer nichtoxydierenden Atmosphäre mit einem Alkan, das mit diesem Alkohol im Wesentlichen nicht mischbar ist und einen Siedepunkt von 230 °C bis 300 °C aufweist (insbesondere Hexadecan), aus der hydrolysierten Lösung extrahiert; und

(e) das extrahierte Polyol einer Vakuumreinigung bei einer Temperatur unterhalb 230 °C unterzieht.

In Schritt (a) erfolgt eine Reaktion des Polyurethans mit den Alkoholgruppen des gesättigten Alkohols unter Bildung von Polyolen, Harnstoffen und Carbamaten (siehe Spalte 3, Zeilen 42 bis 46).

In Schritt (b) wird zu der in Schritt (a) erhaltenen Lösung Wasser und Alkalihydroxyd-Katalysator gegeben, entweder getrennt oder in Form einer wässrigen Katalysatorlösung, wodurch Carbamate und Harnstoffe zu Aminen und Alkohol zersetzt werden. Die Schritte (a) und (b) sind in ihrer Gesamtheit als Hydroglykolyse (genauer: Hydroalkoholyse) mit zeitversetzter Zugabe von Alkohol und Wasser aufzufassen. Wasser wird in einer solchen Menge zugegeben, dass die Lösung bei Temperaturen zwischen 175 °C und 200 °C siedet. Im Fall von Diethylenglykol als Alkohol wird das Wasser in einer Menge zwischen 2,4 % und 0,6 %, vorzugsweise 1,1 %, der Masse des eingesetzten Diethylenglykols zugegeben (siehe Spalte 4, Zeilen 39 bis 46). In der Hydrolyse verbrauchtes Wasser wird durch Zugabe weiteren Wassers ersetzt, um den Wassergehalt konstant zu halten. Nach erfolgter Hydrolyse muss das verwendete Wasser in Schritt (c) entfernt werden (Spalte 5, Zeilen 31 bis 33), bevor die Extraktion in Schritt (e) erfolgen kann.

US 5,714,523 beschreibt ein Verfahren zur Alkoholyse und Hydrolyse eines Polyurethanweichschaumstoffs, indem ein Polyurethanweichschaumstoff mit einem alkoholysierenden Polyol in Kontakt gebracht wird, der Schaumstoff und das Polyol in Gegenwart eines die Alkoholyse und Hydrolyse des Schaumstoffs verstärkenden Katalysators in einer Menge von 0,001 bis 0,25 Gew.-%, basierend auf dem Gewicht des Schaumstoffs, umgesetzt werden, dann eine Trennung der Mischung in eine obere Phase und eine untere Phase erfolgt und diese Phasen in separaten Behältern gesammelt werden, wobei durch Wasserzugabe hydrolysiert wird und die Mischung mit dem Wasser umgesetzt wird, nachdem der Schaumstoff mit dem Polyol kombiniert wurde und bevor eine Trennung der Mischung erfolgt ist.

EP 0 835 901 A2 beschreibt ein Verfahren zur Herstellung recycelter Polyole, das die folgenden Schritte umfasst: (1) Pulverisieren von Polyurethanschaum-Abfällen; (2) Einbringen einer Mischung aus 100 Gewichtsteilen des pulverisierten Polyurethanschaum-Abfalls, 15 bis 100 Gewichtsteilen Glykol und 0,01 bis 10 Gewichtsteilen eines Katalysators in einen mit einer Kühleinrichtung ausgestatteten Reaktionsbehälter; und (3) Reagierenlassen der Mischung unter einer Stickstoffatmosphäre bei einer Temperatur von 120 bis 300 °C für 0,5 bis 15 Stunden, um recyceltes Polyol zu erhalten, wobei der Katalysator ausgewählt ist aus LewisSäuren wie Zinkchlorid, Eisenchlorid, Aluminiumchlorid oder Quecksilberchlorid, Carbonsäuren wie Essig-, Ameisen-, Propion-, Butter- oder Benzoesäure, anorganischen Acetaten wie Magnesiumacetat, Bleiacetat, Calciumacetat, Kaliumacetat, Zinkacetat, Natriumacetat oder Phosphoracetat, und Alkalimetallsalzen wie Natriumcarbonat, Natriumbicarbonat, Calciumhydroxid, Kaliumhydroxid oder Natriumhydroxid.

Nur wenige der literaturbekannten Prozesse des chemischen Recyclings werden dauerhaft im großtechnischen Maßstab betrieben; viele haben noch nicht einmal den Pilotierungsmaßstab erreicht [1]. Angesichts des allgemein gestiegenen Umweltbewusstseins und verstärkter Bestrebungen, industrielle Prozesse möglichst nachhaltig auszugestalten - was beides grundsätzlich für ein chemisches Recycling spricht- zeigt dies augenscheinlich, dass das chemische Recycling von Polyurethanprodukten unter technischen und wirtschaftlichen Gesichtspunkten noch längst nicht ausgereift ist. Herausforderungen bestehen insbesondere bezüglich der Reinheit der zurückgewonnenen Produkte. Polyole müssen möglichst ohne Aminverunreinigungen zurückgewonnen werden, um etwa beim Wiedereinsatz in der Herstellung von Polyurethanschäumen das Schaumbildungsverhalten nicht nachteilig zu beeinflussen. Ist auch eine Wiedergewinnung von Aminen angestrebt, so müssen auch diese selbstredend in möglichst hoher Reinheit gewonnen werden. Daneben enthalten die wiederzuverwertenden Polyurethanprodukte meist noch diverse Hilfs- und Zusatzstoffe (Stabilisatoren, Katalysatoren und dgl. mehr), die wirtschaftlich und umweltschonend von den eigentlichen Zielprodukten des Recyclings abgetrennt und entsorgt werden müssen. Ferner muss ein wirtschaftlich arbeitendes Recyclingverfahren sicherstellen, dass die eingesetzten Reagenzien (beispielsweise eingesetzte Alkohole) möglichst vollständig zurückgewonnen und erneut eingesetzt (also im Kreis geführt) werden können. Aufgrund der großen Volumina an Polyurethanabfällen, die aus gebrauchten Polyurethanschaumstoffen anfallen (z. B. Matratzen, Sitzmöbel, Fahrzeugsitze und dgl.) erhält das Recycling von Polyurethanschäumen eine besondere Bedeutung.

Es bestand also ein Bedarf an weiteren Verbesserungen auf dem Gebiet des chemischen Recyclings von Polyurethanschäumen. Insbesondere wäre es wünschenswert, Polyole und vorzugsweise auch Amine in hoher Reinheit und effizient aus Polyurethanschäumen wiedergewinnen zu können, und zwar insbesondere in einer Art und Weise, die einen großtechnischen Einsatz wirtschaftlich erstrebenswert machen würde. Weiterhin wäre es wünschenswert, einen unter wirtschaftlichen und ökologischen Gesichtspunkten akzeptablen Auslass für die in den Polyurethanprodukten vorhandenen Hilfs- und Zusatzstoffe zur Verfügung zu haben.

Diesem Bedarf Rechnung tragend ist ein Gegenstand der vorliegenden Erfindung ein **Verfahren zur Wiedergewinnung von Rohstoffen (also von Polyolen und optional zusätzlich Aminen) aus Polyurethanschäumen,** umfassend die Schritte

(A) **[Vorbereitung der Chemolyse]** Bereitstellen eines auf einer Isocyanatkomponente und einer Polyolkomponente basierenden Polyurethanschaums;

(B) **[Durchführung der Chemolyse]** Chemolyse des Polyurethanschaums mit einem Alkohol und Wasser in Gegenwart eines Katalysators bei einer Temperatur im Bereich von 130 °C bis 195 °C, bevorzugt im Bereich von 135 °C bis 190 °C, besonders bevorzugt im Bereich von 140 °C bis 190 °C und ganz besonders bevorzugt im Bereich von 165 °C bis 185 °C, wobei

das Massenverhältnis von (insgesamt eingesetztem) Alkohol und (insgesamt eingesetztem) Wasser einerseits zu dem Polyurethanschaum andererseits [also m(Alkohol + Wasser)/m(Polyurethanschaum), wobei "m" für Masse steht] im Bereich von 0,5 bis 2,5 liegt und
die Masse des Wassers 4,0 % bis 10 % der Masse des Alkohols beträgt,

wobei ein erstes Produktgemisch erhalten wird, das

(mindestens) ein Amin, das zu einem Isocyanat der Isocyanatkomponente korrespondiert,
Polyole (nämlich die Polyole, welche die Polyolkomponente ausmachen und/oder Polyole, die gegebenenfalls bei der Umsetzung mit dem Alkohol aus der ursprünglichen Polyolkomponente gebildet werden),
(überstöchiometrisch eingesetzten und daher nicht vollständig umgesetzten) Alkohol und
(überstöchiometrisch eingesetztes und daher nicht vollständig umgesetztes) Wasser

enthält;

wobei der Katalysator ein Metallsalz ausgewählt aus einem Carbonat, einem Hydrogencarbonat, einem Orthophosphat, einem Mono-Hydrogen-Orthophosphat, einem Metaphosphat oder einer Mischung von zwei oder mehr der vorgenannten Metallsalze umfasst (bevorzugt daraus besteht);

(C) **[Trennung von Polyol und Amin]** Aufarbeiten des ersten Produktgemisches unter Erhalt einer Polyolphase enthaltend die Polyole und einer Aminphase enthaltend das Amin, Wasser und den Alkohol;

(D) **[Isolierung des Polyols]** Gewinnen der Polyole aus der Polyolphase; und

(E) **[Isolierung des Amins]** optional (und bevorzugt) Gewinnen des Amins aus der Aminphase.

Vollkommen überraschend wurde gefunden, dass sowohl die Umurethanisierung durch Reaktion der Urethangruppen mit dem Alkohol sowie die anschließende *In situ*-Hydrolyse der Carbamat-Intermediate durch deren Reaktion mit Wasser mit ein und demselben der genannten Katalysatoren katalysiert werden kann. Die genannten Katalysatoren zeichnen sich dadurch aus, dass diese durch das während der Reaktionen entstehende Kohlenstoffdioxid nicht durch Carbonisierung deaktiviert werden und somit sowohl die Umurethanisierung als auch die Hydrolyse katalysieren.

*Polyurethanschäume* im Sinne der vorliegenden Erfindung sind die Polyadditionsprodukte (bisweilen, wenn auch nicht ganz korrekt, auch als Polykondensationsprodukte bezeichnet), die durch Umsetzung von mehrwertigen *Isocyanaten* (= Iscocyanatkomponente der Polyurethanherstellung) mit *Polyolen* (= Polyolkomponente der Polyurethanherstellung) in Gegenwart eines Treibmittels entstehen. Polyurethanschäume enthalten im Allgemeinen neben der oben skizzierten Polyurethangrundstruktur noch andere Strukturen, zum Beispiel Strukturen mit Harnstoffbindungen. Das Vorliegen derartiger von der reinen Polyurethangrundstruktur abweichender Strukturen neben Polyurethanstrukturen verlässt den Rahmen der vorliegenden Erfindung nicht.

In der Terminologie der vorliegenden Erfindung umfasst der Begriff *Isocyanate* alle dem Fachmann im Zusammenhang mit der Polyurethanchemie bekannten Isocyanate wie insbesondere Toluylendiisocyanat (TDI; hergestellt aus Toluylendiamin, TDA), die Di- und Polyisocyanate der Diphenylmethanreihe (MDI; hergestellt aus den Di- und Polyaminen der Diphenylmethanreihe, MDA), 1,5-Pentandiisocyanat (PDI; hergestellt aus 1,5-Pentandiamin, PDA), 1,6-Hexamethylen¬diisocyanat (HDI; hergestellt aus 1,6-Hexamethylendiamin, HDA), Isophorondiisocyanat (IPDI; hergestellt aus Isophorondiamin, IPDA) und Xylylendiisocyanat (XDI; hergestellt aus Xylylendiamin, XDA). Der Ausdruck *"ein Isocyanat"* umfasst selbstverständlich auch Ausführungsformen, in denen zwei oder mehr unterschiedliche Isocyanate (z. B. Gemische aus MDI und TDI) in der Herstellung des Polyurethanschaums eingesetzt wurden, es sei denn, etwas anderes wird ausdrücklich zum Ausdruck gebracht, etwa durch die Formulierung *"genau ein Isocyanat"*. Die Gesamtheit aller in der Herstellung des Polyurethanschaums eingesetzten Isocyanate wird als *Isocyanatkomponente* (des Polyurethanschaums) bezeichnet. Die Isocyanatkomponente umfasst mindestens ein Isocyanat. Analog wird Gesamtheit aller in der Herstellung des Polyurethanschaums eingesetzten Polyole als *Polyolkomponente* (des Polyurethanschaums) bezeichnet. Die Polyolkomponente umfasst mindestens ein Polyol.

In der Terminologie der vorliegenden Erfindung umfasst der Begriff *Polyole* alle dem Fachmann im Zusammenhang mit der Polyurethanchemie bekannten Polyole wie insbesondere Polyetherpolyole, Polyesterpolyole, Polyetherester-Polyole und Polyethercarbonatpolyole. Der Ausdruck *"ein Polyol"* umfasst selbstverständlich auch Ausführungsformen, in denen zwei oder mehr unterschiedliche Polyole in der Herstellung des Polyurethanschaums eingesetzt wurden. Wird daher im Folgenden beispielsweise von *"einem Polyetherpolyol"* (oder *"einem Polyesterpolyol"* usw.) gesprochen, so umfasst diese Terminologie selbstverständlich auch Ausführungsformen, in denen zwei oder mehr verschiedene Polyetherpolyole (oder zwei oder mehr verschiedene Polyesterpolyole usw.) in der Herstellung des Polyurethanschaums eingesetzt wurden.

Als *Carbamate* werden in der Terminologie der vorliegenden Erfindung die durch die Reaktion mit dem Alkohol *in Schritt (B) gebildeten* Urethane bezeichnet.

Ein *zu einem Isocyanat korrespondierendes Amin* bezeichnet dasjenige Amin, durch dessen Phosgenierung das Isocyanat gemäß $R\text{-}NH_2 + COCl_2 \longrightarrow R\text{-}N{=}C{=}O + 2\ HCl$ erhalten werden kann. Analog dazu bezeichnet eine *zu einem Amin korrespondierende Nitroverbindung* diejenige Nitroverbindung, durch deren Reduktion gemäß $R\text{-}NO_2 + 3\ H_2 \longrightarrow R\text{-}NH_2 + 2\ H_2O$ das Amin erhalten werden kann.

Wasser und *Alkohol* werden im Rahmen des erfindungsgemäßen Verfahrens *überstöchiometrisch* eingesetzt. Dies bedeutet, dass Wasser in einer solchen Menge eingesetzt wird, die theoretisch ausreicht, sämtliche Polyurethanbindungen unter Freisetzung von Kohlenstoffdioxid zu Aminen und Polyolen zu hydrolysieren. In gleicher Weise bedeutet der überstöchiometrische Einsatz von Alkohol, dass dieser in einer solchen Menge eingesetzt wird, die theoretisch ausreicht, sämtliche Polyurethanbindungen unter Bildung von Carbamaten des Alkohols und Polyolen umzusetzen. Bei Einsatz der erfindungsgemäß geforderten Massenanteile von Wasser und Alkohol ist Beides regelmäßig der Fall.

Die Formulierung *"Chemolyse des Polyurethanschaums mit einem Alkohol und, Wasser und in Gegenwart eines Katalysators"* impliziert nicht notwendigerweise, dass gleich zu Beginn des Schrittes (B) alles in Schritt (B) einzusetzende Wasser zugegeben werden muss. Vielmehr sind Ausführungsformen, in denen zu Beginn des Schrittes (B) zunächst kein oder nur ein Teil des Wassers zugesetzt wird, und das Wasser bzw. das restliche Wasser sukzessive während der Reaktionsdauer zugegeben wird, von der Erfindung umfasst. In diesem Fall bezieht sich die Mengenangabe von *4,0 % bis 10 %*, *bevorzugt 5,0 % bis 7,0 %*, *der Masse des Alkohols* auf die Menge Wassers, die bis zum Ende der Reaktionsdauer des Schrittes (B) insgesamt zugegeben wird. Grundsätzlich ist es auch vorstellbar, den Alkohol oder ein Alkohol-Wasser-Gemisch sukzessive zuzugeben. In jedem Fall beziehen sich die Mengenangaben im Zusammenhang mit Schritt (B) auf die bis zum Ende der Reaktionsdauer dieses Schrittes jeweils zugegebene Gesamtmenge.

Die *quantitativen Angaben in Bezug auf Wasser* in Schritt (B) beziehen sich auf das als Reagenz für die hydrolytische Carbamat-Spaltung zugegebene Wasser. Im Vergleich dazu sind evtl. *ohnehin* vorhandene Wassermengen aus Feuchtigkeit im eingesetzten Alkohol und/oder im eingesetzten Polyurethanschaum gering. Mit Feuchtigkeit im eingesetzten Alkohol bzw. im eingesetzten Polyurethanschaum sind Feuchtigkeitsspuren gemeint, wie sie im industriellen Maßstab auftreten können. Es ist natürlich möglich, den Alkohol mit für die hydrolytische Carbamat-Spaltung einzusetzendem Wasser vorzuvermischen oder den Polyurethanschaum mit für die hydrolytische Carbamat-Spaltung einzusetzendem Wasser zu benetzen. Derartige Ausführungsformen verlassen den Rahmen der Erfindung nicht, und derart zugesetztes Wasser ist selbstverständlich bei den quantitativen Angaben von Schritt (B) zu berücksichtigen, d. h. die erforderlichenfalls zusätzlich einzusetzende Wassermenge ist entsprechend zu verringern. Wird der Katalysator als wässrige Lösung eingesetzt, so ist das als Lösungsmittel eingesetzte Wasser ebenso bei den quantitativen Angaben von Schritt (B) zu berücksichtigen, d. h. die erforderlichenfalls zusätzlich einzusetzende Wassermenge ist entsprechend zu verringern.

Erfindungsgemäß erfolgt die *"Chemolyse des Polyurethanschaums mit einem Alkohol und Wasser in Gegenwart eines Katalysators [..], wobei der Katalysator ein Metallsalz ausgewählt aus einem Carbonat, einem Hydrogencarbonat, einem Orthophosphat, einem Mono-Hydrogen-Orthophosphat, einem Metaphosphat oder einer Mischung von zwei oder mehr der vorgenannten Metallsalze umfasst (bevorzugt daraus besteht)"*. Erfindungsgemäß wird also zu Beginn des Schritts (B) der Polyurethanschaum mit Alkohol oder einem Alkohol-Wasser-Gemisch und mindestens einem der genannten Metallsalze unter Erhalt einer Reaktionsmischung vermischt, welche anschließend bei Temperaturen in den oben genannten Bereichen umgesetzt wird, erforderlichenfalls (sofern Wasser nicht gleich im Schritt des Vermischens vollständig zugesetzt wird) unter Zugabe von Wasser.

*Orthophosphate* sind die Salze der Orthophosphorsäure, $H_3PO_4$, bei denen alle Protonen abgespalten wurden (= $POa^{3-}$). *Mono-Hydrogen-Orthophosphate* sind die Salze der Orthophosphorsäure, bei denen zwei Protonen abgespalten wurden (= $HPO_4^{2-}$). *Metaphosphate* sind Kondensationsprodukte der Orthophosphorsäure mit der Summenformel $[(PO_3)^-]_n$, worin n eine natürliche Zahl (insbesondere 3 oder 4) bezeichnet.

Es folgt zunächst eine <u>Kurzzusammenfassung</u> verschiedener möglicher **Ausführungsformen der Erfindung:**

In einer **ersten Ausführungsform** der Erfindung, die mit allen anderen Ausführungsformen kombiniert werden kann, umfasst die Isocyanatkomponente ein Isocyanat ausgewählt aus Toluylendiisocyanat (TDI; hergestellt aus Toluylendiamin, TDA), den Di- und Polyisocyanaten der Diphenylmethanreihe (MDI; hergestellt aus den Di- und Polyaminen der Diphenylmethanreihe, MDA), 1,5-Pentandiisocyanat (PDI; hergestellt aus 1,5-Pentandiamin, PDA), 1,6-Hexamethylen¬diisocyanat (HDI; hergestellt aus 1,6-Hexamethylendiamin, HDA), Isophorondiisocyanat (IPDI; hergestellt aus Isophorondiamin, IPDA), Xylylendiisocyanat (XDI; hergestellt aus Xylylendiamin, XDA) oder einer Mischung von zwei oder mehr der vorgenannten Isocyanate.

In einer **zweiten Ausführungsform** der Erfindung, die eine besondere Ausgestaltung der ersten Ausführungsform ist, umfasst die Isocyanatkomponente Toluylendiisocyanat oder eine Mischung aus Toluylendiisocyanat und den Di- und Polyisocyanaten der Diphenylmethanreihe.

In einer **dritten Ausführungsform** der Erfindung, die eine besondere Ausgestaltung der zweiten Ausführungsform ist, umfasst die Isocyanatkomponente Toluylendiisocyanat.

In einer **vierten Ausführungsform** der Erfindung, die eine besondere Ausgestaltung der dritten Ausführungsform ist, umfasst die Isocyanatkomponente neben Toluylendiisocyanat keine weiteren Isocyanate.

In einer **fünften Ausführungsform** der Erfindung, die mit allen anderen Ausführungsformen kombiniert werden kann, umfasst die Polyolkomponente ein Polyetherpolyol, ein Polyesterpolyol, ein Polyetherester-Polyol, ein Polyacrylatpolyol und/oder ein Polyethercarbonatpolyol. Bevorzugt enthält die Polyolkomponente ein Polyetherpolyol. Besonders bevorzugt ist die Polyolkomponente ein Polyetherpolyol (d. h. enthält keine weiteren von Polyetherpolyolen verschiedenen Polyole; wobei jedoch eine Mischung von zwei oder mehr *unterschiedlichen* Polyetherpolyolen umfasst ist und den Rahmen dieser Ausführungsform nicht verlässt).

In einer **sechsten Ausführungsform** der Erfindung, die mit allen anderen Ausführungsformen kombiniert werden kann, umfasst die Polyolkomponente ein Styrol-Acrylnitril-Copolymergefülltes Polyetherpolyol.

In einer **siebten Ausführungsform** der Erfindung, die mit allen anderen Ausführungsformen kombiniert werden kann, ist der Alkohol ausgewählt aus Methanol, Ethanol, Ethylenglykol, Diethylenglykol, Propylenglykol, Dipropylenglykol, Methylglykol, Triethylenglykol, Glycerin, 2-Methyl-1,3-Propandiol oder einer Mischung von zwei oder mehr der vorgenannten Alkohole.

In einer **achten Ausführungsform** der Erfindung, die mit allen anderen Ausführungsformen kombiniert werden kann, ist das Metallsalz ein Salz eines Alkalimetalls oder Erdalkalimetalls.

In einer **neunten Ausführungsform** der Erfindung, die mit allen anderen Ausführungsformen kombiniert werden kann, umfasst das Metallsalz ein Carbonat, ein Hydrogencarbonat, ein Mono-Hydrogen-Orthophosphat, ein Orthophosphat oder eine Mischung von zwei oder mehr der vorgenannten Metallsalze.

In einer **zehnten Ausführungsform** der Erfindung, die eine besondere Ausgestaltung der neunten Ausführungsform ist, umfasst das Metallsalz nur eines der genannten Metallsalze und umfasst bevorzugt keine weiteren Metallsalze.

In einer **elften Ausführungsform** der Erfindung, die mit allen anderen Ausführungsformen kombiniert werden kann, liegt das Massenverhältnis von (insgesamt eingesetztem) Alkohol und (insgesamt eingesetztem) Wasser einerseits zu Polyurethanschaum andererseits [m(Alkohol + Wasser)/m(Polyurethanschaum)] im Bereich von 1,0 bis 1,3.

In einer **zwölften Ausführungsform** der Erfindung, die mit allen anderen Ausführungsformen, insbesondere mit der elften Ausführungsform, kombiniert werden kann, beträgt die Masse des Wassers 5,0 % bis 7,0 % der Masse des Alkohols.

In einer **dreizehnten Ausführungsform** der Erfindung, die mit allen anderen Ausführungsformen kombiniert werden kann, wird die Umsetzung in Schritt (B) für eine Reaktionsdauer von 1,0 h bis 10 h, bevorzugt 1,5 h bis 7,5 h, besonders bevorzugt 2,0 h bis 6,0 h und ganz besonders bevorzugt 2,5 h bis 5,5 h durchgeführt.

In einer **vierzehnten Ausführungsform** der Erfindung, die eine besondere Ausgestaltung der dreizehnten Ausführungsform ist, werden in Schritt (B) zunächst nur der Alkohol und der Katalysator mit dem Polyurethanschaum vermischt und das Wasser wird im weiteren Verlauf des Schritts (B) verteilt über die Reaktionsdauer zugegeben, oder es werden in Schritt (B) zunächst der Alkohol, der Katalysator und 2 % bis 4 % der in Schritt (B) insgesamt einzusetzenden Menge an Wasser mit dem Polyurethanschaum vermischt, und die restliche Menge an Wasser wird im weiteren Verlauf des Schritts (B) verteilt über die Reaktionsdauer zugegeben. Der Zeitraum, über den das Wasser zudosiert wird, beträgt in beiden Alternativen insbesondere 1,0 Stunden bis 5,0 Stunden; die letzte Wasserzugabe erfolgt also vor dem Ende der zuvor definierten Reaktionsdauer.

In einer **fünfzehnten Ausführungsform** der Erfindung, die mit allen anderen Ausführungsformen kombiniert werden kann, wird Schritt (B) bei einem Druck im Bereich von 900 mbar$_{(abs.)}$ bis 1800 mbar$_{(abs.)}$, insbesondere bei Umgebungsdruck, durchgeführt.

In einer **sechzehnten Ausführungsform** der Erfindung, die mit allen anderen Ausführungsformen kombiniert werden kann, wird der Katalysator so dosiert, dass seine Masse 0,1 % bis 3,5 % der Masse des in Schritt (B) eingesetzten Polyurethanschaums entspricht.

In einer **siebzehnten Ausführungsform** der Erfindung, die mit allen anderen Ausführungsformen, außer der im Folgenden aufgeführten achtzehnten und neunzehnten Ausführungsform, kombiniert werden kann, umfasst Schritt (C):

Phasentrennung des ersten Produktgemisches in die Polyolphase und in die Aminphase.

In einer **achtzehnten Ausführungsform** der Erfindung, die eine Alternative zur siebzehnten und folgend genannten neunzehnten Ausführungsform ist, ansonsten aber mit allen anderen Ausführungsformen kombiniert werden kann, umfasst Schritt (C):

Vermengen des ersten Produktgemisches mit einem organischen Lösungsmittel, das mit dem in Schritt (B) eingesetzten Alkohol nicht vollständig mischbar ist, und Phasentrennung in die Polyolphase und in die Aminphase.

In einer **neunzehnten Ausführungsform** der Erfindung, die eine Alternative zur siebzehnten und achtzehnten Ausführungsform ist, ansonsten aber mit allen anderen Ausführungsformen kombiniert werden kann, umfasst Schritt (C):

(C.I) Vermischen des in Schritt (B) erhaltenen ersten Produktgemisches mit einem organischen Lösungsmittel, das mit dem in Schritt (B) eingesetzten Alkohol *mischbar* ist, unter Erhalt eines zweiten Produktgemisches, und
(C.II) Waschen des in Schritt (C.I) erhaltenen zweiten Produktgemisches mit einer wässrigen Waschflüssigkeit und Phasentrennung in die Aminphase und in die Polyolphase.

In einer **zwanzigsten Ausführungsform** der Erfindung, die mit allen anderen Ausführungsformen kombiniert werden kann, umfasst Schritt (D) eine Destillation und/oder Strippung mit einem Strippgas (wie insbesondere Stickstoff oder Wasserdampf, bevorzugt Stickstoff).

In einer **einundzwanzigsten Ausführungsform** der Erfindung, die mit allen anderen Ausführungsformen kombiniert werden kann, wird Schritt (E) durchgeführt wird und umfasst eine destillative Abtrennung von Alkohol und Wasser aus der Aminphase, gefolgt von einer destillativen Reinigung des nach der destillativen Abtrennung verbleibenden Amins.

Die zuvor kurz geschilderten Ausführungsformen und weitere mögliche Ausgestaltungen der Erfindung werden im Folgenden näher erläutert.

BEREITSTELLUNG DES POLYURETHANSCHAUMS ZUM CHEMISCHEN RECYCLING

In **Schritt (A)** des erfindungsgemäßen Verfahrens wird **als Vorbereitung der Chemolyse** der chemisch zu recycelnde *Polyurethanschaum* bereitgestellt.

Dabei kann es sich grundsätzlich um jede Art von Polyurethanschaum handeln, insbesondere kommen sowohl Weichschäume als auch Hartschäume in Frage, wobei Weichschäume (beispielsweise aus alten Matratzen, Polstermöbeln oder Autositzen) bevorzugt sind. Derartige Polyurethanschäume werden üblicherweise unter Einsatz von Pentan, Fluorchlorkohlenwasserstoffen, Dichlormethan und/oder Kohlenstoffdioxid als Treibgase hergestellt.

Weiterhin sind solche Polyurethanschäume bevorzugt, die hinsichtlich der Isocyanatkomponente auf einem Isocyanat ausgewählt aus Toluylendiisocyanat (TDI), den Di- und Polyisocyanaten der Diphenylmethanreihe (MDI), 1,5-Pentandiisocyanat (PDI), 1,6-Hexamethylendiisocyanat (HDI), Isophorondiisocyanat (IPDI), Xylylendiisocyanat (XDI) oder Mischungen von zwei oder mehr der vorgenannten Isocyanate basieren. Besonders bevorzugt sind Polyurethanschäume, die hinsichtlich der Isocyanatkomponente auf einer Mischung aus TDI und MDI basieren. Ganz besonders bevorzugt sind Polyurethanschäume, die hinsichtlich der Isocyanatkomponente nur auf TDI basieren.

Im Hinblick auf die Polvolkomponente sind solche Polyurethanschäume bevorzugt, die auf einem Polyol ausgewählt aus einem Polyetherpolyol, einem Polyesterpolyol, einem Polyetherester-Polyol, einem Polyethercarbonatpolyol, einem Polyacrylatpolyol oder einer Mischung von zwei oder mehr der vorgenannten Polyole basieren. Bevorzugt enthält die Polyolkomponente ein Polyetherpolyol. Besonders bevorzugt ist die Polyolkomponente ein Polyetherpolyol (d. h. enthält keine weiteren von Polyetherpolyolen verschiedenen Polyole; wobei jedoch eine Mischung von zwei oder mehr *unterschiedlichen* Polyetherpolyolen umfasst ist und den Rahmen dieser Ausführungsform nicht verlässt). Bei dem Polyetherpolyol kann es sich auch um ein solches handeln, das mit einem Stryrol-Acrylnitril-Copolymer (SAN-Copolymer) gefüllt ist. Es ist einer der Vorteile der Erfindung, dass sie auch auf derartige Polyolkomponenten anwendbar ist. Die Herausforderung bei der Chemolyse von Polyurethanschäumen, deren Polyolkomponente auf SAN-Copolymer-gefüllten Polyetherpolyolen basiert, besteht darin, dass das SAN-Copolymer während der Chemolyse als feinteiliges Polymerpartikel freigesetzt wird. Dies gilt unabhängig vom gewählten Chemolyseverfahren. Das als feinteiliges polymeres Partikel in der Reaktionsmischung vorliegende SAN-Polymer führt zu Problemen in der späteren Auftrennung durch z. B. extraktive Verfahren. Weiterhin ist aufgrund der Feinteiligkeit der Polymerpartikel eine Filtration kaum möglich, da der Filter schnell blockiert und eine weitere Abtrennung nicht mehr möglich ist. Der Vorteil der erfindungsgemäßen Hydroalkoholyse liegt nun darin, dass das SAN-Polymer nach dessen Freisetzung aus dem Polyetherpolyol teilweise durch den Hydrolyseschritt in eine lösliche Form gebracht wird und dadurch die Aufarbeitung des Reaktionsgemisches nach der Chemolyse durch eine Extraktion problemlos erfolgen kann.

Ganz besonders bevorzugt handelt es sich bei dem Polyurethanschaum um einen solchen Schaum, dessen Isocyanatkomponente Toluylendiisocyanat (TDI) und Di- und Polyisocyanate der Diphenylmethanreihe (MDI), insbesondere nur TDI, enthält, und dessen Polyolkomponente ein Polyetherpolyol enthält (und insbesondere ein Polyetherpolyol *ist,* d. h. keine weiteren von Polyetherpolyolen verschiedenen Polyole enthält, wobei jedoch eine Mischung von zwei oder mehr *unterschiedlichen* Polyetherpolyolen umfasst ist und den Rahmen dieser Ausführungsform nicht verlässt.)

Bevorzugt umfasst bereits Schritt (A) vorbereitende Schritte für die Spaltung der Urethanbindungen in Schritt (B.II). Dabei handelt es sich insbesondere um ein mechanisches Zerkleinern der Polyurethanschäume. Solche vorbereitenden Schritte sind dem Fachmann bekannt; es sei beispielsweise auf die in [1] zitierte Literatur verwiesen. Je nach Beschaffenheit des Polyurethanschaums kann es vorteilhaft sein, diesen vor der mechanischen Zerkleinerung "einzufrieren", um den Zerkleinerungsvorgang zu erleichtern.

Vor, während oder nach der mechanischen Zerkleinerung kann eine Behandlung des Polyurethanschaums mit wässrigen oder alkoholischen Desinfektionsmitteln erfolgen. Derartige Desinfektionsmittel sind bevorzugt Wasserstoffperoxid, Chlordioxid, Natriumhypochlorit, Formaldehyd, Natrium-N-Chlor-(4 Methylbenzol)sulfonamid (Chloramin T) und/oder Peressigsäure (wässrige Desinfektionsmittel) bzw. Ethanol, Isopropanol, und/oder 1-Propanol (alkoholische Desinfektionsmittel).

Es ist auch denkbar, die oben beschriebenen vorbereitenden Schritte an einem Ort durchzuführen, der von dem Ort der Chemolyse räumlich getrennt ist. In diesem Fall wird der vorbereitete Schaum in geeignete Transportfahrzeuge, zum Beispiel Silofahrzeuge, für den Weitertransport befüllt. Für den Weitertransport kann der vorbereitete Schaum zudem komprimiert werden, um ein höheres Masse-VolumenVerhältnis zu erreichen. Am Ort der Chemolyse wird dann der Schaum in die für die Chemolyse vorgesehene Reaktionseinrichtung gefüllt. Es ist auch vorstellbar, das eingesetzte Transportfahrzeug direkt mit der Reaktionseinrichtung zu verbinden.

CHEMOLYSE DES POLYURETHANSCHAUMS UNTER ERHALT DES ERSTEN PRODUKTGEMISCHES

**Schritt (B)** des erfindungsgemäßen Verfahrens beinhaltet die **Chemolyse** des in Schritt (A) bereitgestellten Polyurethanschaums.

Die Chemolyse wird vorzugsweise unter Sauerstoffausschluss durchgeführt. Dies bedeutet, dass die Umsetzung in einer Inertgasatmosphäre (insbesondere in einer Stickstoff-, Argon- oder Heliumatmosphäre) durchgeführt wird. Bevorzugt werden auch die eingesetzten Chemolysereagenzien (Wasser und Alkohol) durch Inertgassättigung von Sauerstoff befreit.

Schritt (B) wird erfindungsgemäß als *Hydroalkoholyse* durchgeführt. Der hier verwendete Begriff Hydroalkoholyse wird in der Literatur meist als Hydro*glykolyse* bezeichnet; vgl. Nr. 3 weiter oben. Da der Begriff Hydroglykolyse jedoch nur bei Einsatz von Glykol als Alkohol korrekt ist, wird im Rahmen der vorliegenden Erfindung die allgemeinere Bezeichnung *Hydroalkoholyse* verwendet.

Als Alkohol wird vorzugsweise Methanol, Ethanol, Ethylenglykol, Diethylenglykol, Propylenglykol, Dipropylenglykol, Methylglykol, Triethylenglykol, Glycerin, 2-Methyl-1,3-Propandiol oder einer Mischung von zwei oder mehr der vorgenannten Alkohole verwendet. Diethylenglykol und Propylenglykol sind besonders bevorzugt. Wasser und Alkohol können vorvermischt werden; erforderlich ist dies aber nicht.

Das als Katalysator eingesetzte Metallsalz ist vorzugsweise das Salz eines Alkalimetalls oder Erdalkalimetalls, wobei Natriumsalze besonders bevorzugt sind. Hinsichtlich des Anions des Metallsalzes sind Carbonate, Hydrogencarbonate, Mono-Hydrogen-Orthophosphate, Orthophosphate und Mischungen von zwei oder mehr derselben besonders bevorzugt. Ganz besonders bevorzugt wird ein Carbonat, ein Hydrogencarbonat oder ein Orthophosphat verwendet (d. h. es wird nur eines der vorgenannten verwendet und keine Mischung). Dabei ist es insbesondere bevorzugt, dass auch keine weiteren, zuvor nicht aufgezählten, Katalysatoren eingesetzt werden. Es hat sich bewährt, den Katalysator so zu dosieren, dass seine Masse 0,1 % bis 3,5 % der Masse des in Schritt (B) umzusetzenden Polyurethanschaums entspricht.

In Schritt (B) wird erfindungsgemäß eine Reaktionstemperatur im Bereich von 130 °C bis 195 °C eingehalten. Die Reaktionstemperatur beträgt bevorzugt 135 °C bis 190 °C, besonders bevorzugt 140 °C bis 190 °C und ganz besonders bevorzugt 165 °C bis 185 °C. Unabhängig von der gewählten Temperatur ist es bevorzugt, die Reaktion bei Umgebungsdruck durchzuführen. Ein tieferer Druck (insbesondere bis zu 900 mbar$_{(abs)}$) oder ein höherer Druck (insbesondere bis zu 1800 mbar$_{(abs)}$) ist jedoch ebenfalls möglich. Die Umsetzung in Schritt (B) ist im Allgemeinen innerhalb eines Zeitraums von 1,0 h bis 10 h, bevorzugt 1,5 h bis 7,5 h, besonders bevorzugt 2,0 h bis 6,0 h und ganz besonders bevorzugt 2,5 h bis 5,5 h, beendet, d. h. nach einer Reaktionsdauer innerhalb dieses Zeitraums findet kein oder allenfalls nur ein geringfügiger weiterer Umsatz statt.

Wie bereits erwähnt, ist es vorteilhaft, das für die Hydroalkoholyse in Schritt (B) einzusetzende Wasser nicht gleich zu Beginn des Reaktionszeitraums zuzugeben, zumindest nicht vollständig zuzugeben. Es hat sich bewährt, zunächst gar kein oder nur einen geringen Anteil, nämlich 2 % bis 4 %, der in (B) insgesamt einzusetzenden Menge an Wasser mit den übrigen Reaktanden (Alkohol, Katalysator und der Polyurethanschaum) zu vermischen und die restliche bzw. gesamte Menge an Wasser im weiteren Verlauf des Schritts (B) über die Reaktionsdauer zuzugeben. Die Zugabe des Wassers für die hydrolytische Spaltung der als Intermediat gebildeten Carbamate erfolgt dabei kontinuierlich oder portionsweise in Intervallen in der Weise, dass die Siedetemperatur des Reaktionsgemisches stets in den spezifizierten Bereichen, insbesondere in dem besonders bevorzugten Bereich von 165 °C bis 185 °C, bleibt. Die Dosierzeit des Wassers liegt bevorzugt im Bereich von 1,0 Stunden bis 5,0 Stunden(abhängig vom Siedepunkt des eingesetzten Alkohols).

In einer bevorzugten Ausführungsform wird ein Massenverhältnis von (insgesamt eingesetztem) Alkohol und (insgesamt eingesetztem) Wasser einerseits zu Polyurethanschaum andererseits [m(Alkohol + Wasser)/m(Polyurethanschaum)] im Bereich von 1,1 bis 1,3 eingesetzt. Wird das Wasser nicht auf einmal, sondern nach und nach zugegeben wie zuvor beschrieben, gilt dies für die insgesamt in Schritt (B) eingesetzte Menge an Wasser.

Die Menge an Wasser, die in Schritt (B) eingesetzt wird, beträgt bevorzugt 5,0 % bis 7,0 % der Masse des Alkohols, der in Schritt (B) eingesetzt wird; dies gilt insbesondere in Verbindung mit dem zuvor genannten Bereich von 1,0 bis 1,3 für das Massenverhältnis [m(Alkohol + Wasser)/m(Polyurethanschaum)]. Wird das Wasser nicht auf einmal, sondern nach und nach zugegeben wie zuvor beschrieben, gilt dies für die insgesamt in Schritt (B) eingesetzte Menge an Wasser.

Schritt (B.II) kann in einem beliebigen, in der Fachwelt für einen derartigen Zweck bekannten Reaktor durchgeführt werden. Insbesondere eignen sich Rührkessel (gerührte Reaktoren) und Rohrreaktoren als Chemolysereaktoren.

AUFARBEITUNG DES ERSTEN PRODUKTGEMISCHES

Schritt (B) liefert ein *erstes Produktgemisch,* das

(mindestens) ein Amin, das zu einem Isocyanat der Isocyanatkomponente korrespondiert,
Polyole (nämlich die Polyole, welche die Polyolkomponente ausmachen und/oder Polyole, die gegebenenfalls bei der Umsetzung mit dem Alkohol aus der ursprünglichen Polyolkomponente gebildet werden),
(überstöchiometrisch eingesetzten und daher nicht vollständig umgesetzten) Alkohol und
(überstöchiometrisch eingesetztes und daher nicht vollständig umgesetztes) Wasser

enthält. In **Schritt (C)** wird dieses erste Produktgemisch unter Erhalt einer *Polyolphase enthaltend die Polyole* und einer *Aminphase enthaltend das Amin, Wasser und den Alkohol* aufgearbeitet **(Trennung von Polyol und Amin).** Es versteht sich für den Fachmann von selbst, dass diese Trennung nicht zwingend in dem Sinne perfekt verlaufen muss, dass *sämtliches* Polyol in die Polyolphase und *sämtliches* Amin (sowie *sämtliches* Wasser und *sämtlicher* Alkohol) in die Aminphase gelangen. Wenn beispielsweise infolge der vorherrschenden Löslichkeitsgleichgewichte geringe Mengen des Amins in die Polyolphase gelangen (oder geringe Mengen des Polyols in die Aminphase), verlässt dies den Rahmen der vorliegenden Erfindung selbstverständlich nicht.

Aufgrund der Reaktionsführung in Schritt (B) als *Hydro*alkoholyse ist dieses erste Produktgemisch regelmäßig zweiphasig. Bei den zwei Phasen handelt es sich um eine alkoholisch-wässrige und eine organische Phase. Abhängig von der genauen Natur des eingesetzten Polyurethanschaums und des in Schritt (B) eingesetzten Alkohols ist es möglich, dass die im ersten Produktgemisch enthaltene organische Phase das Polyol und die im ersten Produktgemisch enthaltene alkoholisch-wässrige Phase das Amin jeweils in einem solchen Anteil enthält, dass die Trennung von Amin und Polyol in Schritt (C) durch eine einfache Trennung des ersten Produktgemisches in eine organische und in eine alkoholische-wässrige Phase realisiert werden kann. In diesem Fall ist die im ersten Produktgemisch enthaltene organische Phase die in Schritt (C) angestrebte *Polyolphase,* die direkt dem Schritt (D) zugeführt werden kann. In gleicher Weise ist dann die im ersten Produktgemisch enthaltene alkoholisch-wässrige Phase die in Schritt (C) angestrebte *Aminphase,* die - sofern die Gewinnung des Amins angestrebt ist - direkt dem Schritt (E) zugeführt werden kann. Diese Ausführungsform ist beispielsweise bei TDI-Schäumen und Durchführung der Hydroalkoholyse mit Diethylenglykol als Alkohol denkbar, da TDA gut wasserlöslich ist und so gemeinsam mit dem ebenfalls wasserlöslichen Diethylenglykol die alkoholisch-wässrige Phase des ersten Produktgemisches ausbildet, während die zurückgewonnenen Polyole die organische Phase ausbilden. Ob diese Ausführungsform anwendbar ist, kann durch fachmännische Überlegungen oder einfache Vorversuche leicht ermittelt werden.

Es ist jedoch auch möglich, dass eine einfache Phasentrennung des in Schritt (B) erhaltenen ersten Produktgemisches nicht zur einer Polyolphase und einer Aminphase mit ausreichendem Polyol- bzw. Aminanteil führt. In einem solchen Fall ist es bevorzugt, das erste Produktgemisch in seiner Gesamtheit mit einem organischen Lösungsmittel zu extrahieren. Hierfür bestehen mehrere Möglichkeiten:

In einer bevorzugten Ausführungsform umfasst Schritt (C) das Vermengen des in Schritt (B) erhaltenen ersten Produktgemisches mit einem organischen Lösungsmittel, das mit dem in Schritt (B) eingesetzten Alkohol *nicht* vollständig mischbar ist, und Phasentrennung in eine Alkoholphase, die neben dem Alkohol das Amin und Wasser enthält und in dieser Ausführungsform der *Aminphase* entspricht, und in eine Lösungsmittelphase, die neben dem zur Extraktion eingesetzten Lösungsmittel die Polyole enthält und in dieser Ausführungsform der *Polyolphase* entspricht. Die Forderung, dass das in Schritt (C) einzusetzende organische Lösungsmittel *mit dem in Schritt (B) eingesetzten Alkohol nicht vollständig mischbar ist* bedeutet, dass es - unter den für Schritt (C) vorliegenden Bedingungen von Temperatur und Verhältnis von organischem Lösungsmittel zu Alkohol aus Schritt (B) - eine Mischungslücke derart geben muss, dass eine Phasentrennung möglich wird. Dies ist beispielsweise dann der Fall, wenn das organische Lösungsmittel ausgewählt wird aus aliphatischen Kohlenwasserstoffen, alicyclischen Kohlenwasserstoffen (z. B. Cyclohexan), aromatischen Kohlenwasserstoffen (z. B. Toluol) und Mischungen von zwei oder mehr der vorgenannten organischen Lösungsmittel, und der Alkohol ausgewählt wird aus Methanol, Ethanol, Ethylenglykol, Diethylenglykol, Propylenglykol, Dipropylenglykol, Methylglykol, Triethylenglykol, Glycerin, 2-Methyl-1,3-Propandiol und Mischungen von zwei oder mehr der vorgenannten Alkohole.

In einer weiteren bevorzugten Ausführungsform umfasst Schritt (C)

(C.I) Vermischen des in Schritt (B) erhaltenen ersten Produktgemisches mit einem organischen Lösungsmittel, das mit dem in Schritt (B) eingesetzten Alkohol *mischbar* ist, unter Erhalt eines zweiten Produktgemisches, und

(C.II) Waschen des in Schritt (C.I) erhaltenen zweiten Produktgemisches mit einer wässrigen Waschflüssigkeit und Phasentrennung in eine wässrige Phase, die neben Wasser den Alkohol und das Amin enthält und in dieser Ausführungsform der *Aminphase* entspricht, und in eine Lösungsmittelphase, die neben dem zur Extraktion eingesetzten Lösungsmittel die Polyole enthält und in dieser Ausführungsform der *Polyolphase* entspricht.

Die Forderung, dass das in Schritt (C.I) einzusetzende organische Lösungsmittel *mit dem in Schritt (B) eingesetzten Alkohol mischbar ist,* bedeutet, dass sich - unter den für Schritt (C.I) vorliegenden Bedingungen von Temperatur und Verhältnis von organischem Lösungsmittel zu Alkohol aus Schritt (B) - eine Mischung aus dem organischen Lösungsmittel und dem Alkohol aus Schritt (B) nicht spontan in zwei Phasen trennt. Dies ist beispielsweise dann der Fall, wenn das organische Lösungsmittel in Schritt (C.I) ausgewählt wird aus Halogen-substituierten aliphatischen Kohlenwasserstoffen, Halogen-substituierten alicyclischen Kohlenwasserstoffen, Halogen-substituierten aromatischen Kohlenwasserstoffen und Mischungen von zwei oder mehr der vorgenannten organischen Lösungsmittel, und der Alkohol in Schritt (B) ausgewählt wird aus Methanol, Ethanol, Ethylenglykol, Diethylenglykol, Propylenglykol, Dipropylenglykol, Methylglykol, Triethylenglykol, Glycerin, 2-Methyl-1,3-Propandiol und Mischungen von zwei oder mehr der vorgenannten Alkohole.

AUFARBEITUNG DER POLYOLPHASE

In Schritt (D) wird die in Schritt (C) erhaltene organische Polyolphase unter Gewinnung der Polyole aufgearbeitet **(Isolierung des Polyols).** Dies wird vorzugsweise mittels Destillation und/oder Strippung mit einem Strippgas (wie insbesondere Stickstoff oder Wasserdampf, bevorzugt Stickstoff) durchgeführt. Dabei wird eine Destillation bevorzugt in einem Verdampfer ausgewählt aus Fallfilmverdampfern, Dünnschichtverdampfern, Flashverdampfern, Steigfilmverdampfern, Naturumlaufverdampfern, Zwangsumlaufverdampfern oder Kesselverdampfern durchgeführt. Besonders bevorzugt ist es, der Destillation eine Strippung mit Wasserdampf nachzuschalten.

Eine Strippung mit Wasserdampf kann durch Durchleiten von Wasserdampf in an sich bekannten Stripp-Kolonnen durchgeführt werden. Die Strippung mit Wasserdampf kann jedoch auch so erfolgen, dass man Wasser in flüssiger Form der (gegebenenfalls bereits in einer Destillation vorgereinigten) Polyolphase zugibt, anschließend überhitzt (unter Einhaltung eines mittels eines Druckventils eingestellten Gegendrucks, der ausreichend ist, das Wasser flüssig zu halten) und nach dem Druckventil entspannt, wodurch das im Polyol enthaltene Wasser verdampft und strippend wirkt.

AUFARBEITUNG DER AMINPHASE

Bevorzugt wird in Schritt (E) die in Schritt (C) erhaltene wässrige Aminphase unter Gewinnung des Amins aufgearbeitet **(Isolierung des Amins).**

Die Gewinnung des Amins umfasst bevorzugt zunächst eine destillative Abtrennung von Alkohol und Wasser aus der Aminphase. Dies kann durch bekannte Destillationstechniken geschehen. Das zurückbleibende rohe Amin wird weiter aufgearbeitet, bevorzugt durch Destillation. Es ist insbesondere bevorzugt, die Gewinnung des Amins in die Aufarbeitung neu hergestellten Amins einzubinden, *indem das rohe Amin einer Rohproduktfraktion des Amins, die aus einer Neuherstellung desselben Amins stammt, beigemischt wird.* Diese Ausführungsform bietet einen wirtschaftlichen und umweltschonenden Auslass für aus dem Polyurethanprodukt stammende Verunreinigungen. Sie wird in der internationalen Patentanmeldung WO 2020/260387 A1 näher beschrieben.

**Beispiele:**

Die Überprüfung des Reaktionsumsatzes erfolgte über die Bestimmung der Aminzahl des Reaktionsgemisches nach der Hydroglykolyse. Die Aminzahl gibt an, wieviel mg Kaliumhydroxid notwendig sind, um die in 1 g Substanz vorhandenen freien organischen Amine zu neutralisieren. Dabei werden primäre, sekundäre und tertiäre Aminogruppen erfasst. Die Aminogruppen sind schwache Basen. Als Lösungsmittel wird konzentrierte Essigsäure (Eisessig, 99- bis 100%ig) eingesetzt. Das Amin wird durch das Lösungsmittel protoniert und somit in die korrespondierende Säure überführt, die mit der deprotonierten Säure des Eisessigs nun als Ionenpaar vorliegt. Anschließend wird mit 0,1-molarer Perchlorsäure als Titriermittel titriert, wobei die Perchlorsäure das Anion des Lösungsmittels (Eisessig) verdrängt. Die dabei verbrauchte Perchlorsäure wird dem Verbrauch an Kaliumhydroxid gleichgesetzt. Die Aminzahl wird üblicherweise in *Milligramm KOH pro Gramm untersuchter Probe* angegeben und berechnet sich nach:

$$\frac{AZ}{mg \cdot g^{-1}} = \frac{\frac{V}{ml} \cdot [b_i / (mol \cdot l^{-1})] \cdot [M(KOH) / (g \cdot mol^{-1})] \cdot f}{\frac{m}{g}}$$

worin

- AZ     für die Aminzahl,
- V     für das Volumen verbrauchter Perchlorsäurelösung,
- m     für die Masse der titrierten Probe,
- M(KOH)     für die molare Masse von KOH (56,11 g $\times$ mol$^{-1}$),
- $b_i$     für die Molarität der Perchlorsäurelösung und
- f     für den dimensionslosen Faktor (Titer) der Perchlorsäurelösung stehen.

**Beispiel 1:**

In einem 1000 ml 4-Halskolben mit Rührer, Thermometer und Kühlaufsatz werden 300 g Diethylenglykol und 5,5 g Natriumcarbonat vorgelegt und unter Stickstoff auf 180 °C erhitzt. Unter Rühren werden 300 g PU-Weichschaum der in Tabelle 1 angegebenen Zusammensetzung zugegeben und gelöst. Nach dem Lösen wird 2 Stunden bei 180 °C gerührt, und anschließend werden 16,5 g Wasser in einem Zeitraum von 1 Stunde so zudosiert, dass die Reaktionstemperatur nicht unter 170 °C fällt. Nach beendeter Wasserzugabe wird 2 Stunden bei 180 °C nachgerührt, und der Reaktionsumsatz wird wie oben angegeben über die Aminzahl bestimmt. Die theoretisch bei vollständiger Rückgewinnung sämtlichen Amins zu erwartende Aminzahl des Reaktionsgemisches beträgt 86,0 mg KOH/g

Aminzahl (gemessen) des Reaktionsgemisches: 93,0 mgKOH/g

In einem $^1$H-NMR-Spektrum des Reaktionsgemisches wurden keine TDI-basierten Carbamate mehr nachgewiesen, sondern nur TDA.

Tabelle 1: Formulierung des in Beispiel 1 umgesetzten Polyurethanweichschaums (Angaben sind Gewichtsteile)

| Polyol Arcol 1108 (1) | 72,4 |
|---|---|
| Wasser | 1,8 |
| Tegostab BF 2370 (2) | 0,9 |
| Dabco T9 (3) | 0,1 |
| Niax A1 (4) | 0,06 |
| TDI 80 (5) | 24,7 |
| Kennzahl (6) | 108 |
| (1) Polyetherpolyol der Firma Covestro Deutschland AG<br>(2) Polyethersiloxan Additiv der Firma Evonik AG<br>(3) DABCO T9 ist ein Zinnoctoat Katalysator der Evonik AG<br>(4) Niax A1 ist ein Amin Katalysator der Momentive Performance Materials<br>(5) TDI 80 ist ein Toluylendiisocyanat der Covestro Deutschland AG<br>(6) Verhältnis NCO- zu OH-Gruppen | |

**Beispiele 3 bis 7:**

Es wurden weitere Versuche mit anderen Katalysatoren als in Beispiel 1 aber ansonsten gleicher Vorgehensweise durchgeführt. Die Resultate sind in Tabelle 2 zusammengestellt.

Tabelle 2: Weitere Versuche analog Beispiel 1 mit anderen Katalysatoren.

| | Bsp. 2 (erf.-gem.) | Bsp. 3 (erf.-gem.) | Bsp. 4 (erf.-gem.) | Bsp. 5 (Vergleich) | Bsp. 6 (erf.-gem.) | Bsp. 7 (Vergleich) |
|---|---|---|---|---|---|---|
| $m(Na_2CO_3)/g$ | 0 | 0 | **3,0** | 0 | 0 | 0 |
| $m(Na_3PO_4)/g$ | **4,5** | **9,3** | 0 | 0 | 0 | 0 |
| $m(Na_2HPO_4)/g$ | 0 | 0 | 0 | 0 | **7,2** | 0 |
| $m(NaOCH_3)/g$ (30%ig in MeOH) | 0 | 0 | 0 | **5,0** | 0 | 0 |
| Na-Polyphosphat | 0 | 0 | 0 | 0 | 0 | **9,0** |
| Aminzahl / (mg KOH / g) (gemessen) | 91,8 | 102 | 88,2 | 103 | 88,0 | 55,0 |
| Erläuterungen: erf.-gem. = erfindungsgemäß. | | | | | | |

Im Vergleichsbeispiel 5 bildeten sich feste Ablagerungen am Reaktionsgefäß und die Umsetzung war nicht vollständig. Im Vergleichsbeispiel 7 war die Aminzahl deutlich zu gering.

**Beispiel 8: Herstellung eines Weichschaums aus dem r-Polyetherpolyol**

Aus dem Reaktionsgemisch, das in Beispiel 1 anfiel, wurde das Polyetherpolyol wie folgt zurückgewonnen ("r-Polyetherpolyol"):

Das Reaktionsgemisch wurde mit 3 Gewichtsteilen Cyclohexan versetzt und kräftig homogenisiert. Im Scheidetrichter trennte sich die Mischung in 2 Phasen, eine organische Cyclohexan-Polyether-Phase sowie eine Diethylenglykol-Amin-Phase. Die organische Phase wurde abgetrennt, das Lösungsmittel destillativ entfernt und das r-Polyol so zurückgewonnen. Aus dem so erhaltenen r-Polyetherpolyol wurden Weichschäume hergestellt und mit Weichschäumen, die nur auf dem originalen Polyetherpolyol Arcol 1108 basieren, verglichen. Tabelle 3 zeigt die verwendeten Rezepturen, Tabelle 4 stellt die Ergebnisse einander gegenüber.

Tabelle 3: Eingesetzte Weichschaumrezepturen (Angaben sind Gewichtsteile)

|  | Bsp. 9 (Referenz) | Bsp. 10 | Bsp. 11 | Bsp. 12 (Referenz) | Bsp. 13 |
|---|---|---|---|---|---|
| Arcol 1108 | 72,4 | 0 | 36,0 | 72,4 | 0 |
| **r-Polyol aus Bsp. 1** | **0** | **71,7** | **36,0** | **0** | **71,6** |
| Wasser | 1,8 | 1,8 | 1,8 | 1,8 | 1,8 |
| Tegostab BF 2370 | 0,9 | 0,9 | 0,9 | 0,9 | 0,9 |
| Dabco T9 | 0,1 | 0,1 | 0,1 | 0,14 | 0,14 |
| Niax A1 | 0,06 | 0,06 | 0,06 | 0,07 | 0,07 |
| TDI 80 | 24,7 | 25,5 | 25,1 | 24,7 | 25,5 |
| Kennzahl | 108 | 108 | 108 | 108 | 108 |

Tabelle 4: Gegenüberstellung der Ergebnisse

| Gemessene Größe | Einheit | Bsp. 9 (Referenz) | Bsp. 10 | Bsp. 11 | Bsp. 12 (Referenz) | Bsp. 13 |
|---|---|---|---|---|---|---|
| Schaumhöhe | cm | 15 | 18 | 17 | 15 | 18 |
| Startzeit | s |  | 15 | 15 | 15 | 12 |
| Steigzeit abgeschlossen | s |  | 150 | 140 | 128 | 135 |
| Schrumpf bei RT |  | 1 | 1 | 1 | 1 | 1 |
| Innenriss |  | nein | ja | nein | nein | nein |
| Rohdichte | $kg/m^3$ | 31,3 |  | 33,1 | 37,5 | 29,8 |
| Luftdurchlässigkeit | mm $H_2$O-Säule | 350 |  | 92 | 350 | 107 |
| Rückprallelastizität | % | 42 |  | 43 | 39 | 40 |
| Stauchhärte bei 40% Höhe | MPa | 23,34 |  | 23,44 | 40,45 | 25,90 |

Erläuterungen:

**Startzeit:** Wird bestimmt, wenn die Mischung in der Holzform liegt. Sie ist die Zeitspanne vom Start der Vermischung (Polyolkomponente mit der Isocyanatkomponente) bis zum sichtbaren Schäumungsbeginn.

**Steigzeit:** Wird bestimmt, wenn die Mischung in der Horzform liegt. Sie ist die Zeitspanne vom Start der Vermischung (Polyolkomponente mit der Isocyanatkomponente) bis zum Erreichen der Endhöhe des Schaumstoffes.

**Abblasen:** Bezeichnet die Gasentweichung und Ausbildung der Offenzelligkeit nach Erreichen der Endhöhe des Schaumstoffes.

**Schrumpf bei RT (Raumtemperatur):** 1 = Schaumstoff leicht an den Seiten geschrumpft.

**Luftdurchlässigkeit:** Die zur Messung der Luftdurchlässigkeit eingesetzte Apparatur besteht aus einem mit einer Millimetereinteilung von 0 bis 350 versehenen Glaszylinder, dessen Innendurchmesser 36 mm beträgt, und einem Innenrohr von 7 mm lichter Weite. Dieses Innenrohr endet oben in einem T-Stück, an das an der einen Seite die Luftzufuhr und an der anderen Seite der Schlauch mit dem Messkopf angeschlossen wird. Der Schlauch für den Messkopf besitzt einen Innendurchmesser von 12 mm und eine Länge von 1,80 m. Der Glaszylinder ist nach unten geschlossen und kann über den nach hinten angebrachten Trichter mit Wasser befüllt werden. Das Prüfgerät wird über zwei Hähne, einen Druckminderer und einen Schlauch von beliebiger Länge und beliebigem Durchmesser an einen Druckluftquelle angeschlossen, wobei der Druckminderer auf ca. 3,0 bar$_{(abs.)}$ eingestellt wird.

Wie man sieht, kann das zurückgewonnene r-Polyol nach dem chemischen Recyclingprozess wieder als Polyoletherpolyol bis zu 100 % in einer Weichschaumrezeptur eingesetzt werden. Die visuellen Eigenschaften sowie die Start- und Steigzeit der Beispiele bei Einsatz des r-Polyols im Vergleich zu den Referenzbeispielen zeigen vergleichbares Verhalten. Die mechanische Eigenschaften wie Rückprallelastizität und Stauchhärte des r-Polyols sind vergleichbar mit dem Referenz-Polyetherpolyol. Die niedrigeren Werte in der Luftdurchlässigkeit bei den Beispielen 11 und 13, in denen das r-Polyol eingesetzt wurde, zeigen eine höhere Offenzelligkeit im Vergleich zu den Referenzbeispielen 9 und 12.

## Patentansprüche

1. Verfahren zur Wiedergewinnung von Rohstoffen aus Polyurethanschäumen, umfassend die Schritte:

    (A) Bereitstellen eines auf einer Isocyanatkomponente und einer Polyolkomponente basierenden Polyurethanschaums;
    (B) Chemolyse des Polyurethanschaums mit einem Alkohol und Wasser in Gegenwart eines Katalysators bei einer Temperatur im Bereich von 130 °C bis 195 °C, wobei

    das Massenverhältnis von Alkohol und Wasser einerseits zu dem Polyurethanschaum andererseits im Bereich von 0,5 bis 2,5 liegt und
    die Masse des Wassers 4,0 % bis 10 % der Masse des Alkohols beträgt,
    wobei ein erstes Produktgemisch erhalten wird, das

    ein Amin, das zu einem Isocyanat der Isocyanatkomponente korrespondiert,
    Polyole,
    Alkohol und
    Wasser;

    enthält,
    wobei der Katalysator ein Metallsalz ausgewählt aus einem Carbonat, einem Hydrogencarbonat, einem Orthophosphat, einem Mono-Hydrogen-Orthophosphat, einem Metaphosphat oder einer Mischung von zwei oder mehr der vorgenannten Metallsalze umfasst;

    (C) Aufarbeiten des ersten Produktgemisches unter Erhalt einer Polyolphase enthaltend die Polyole und einer Aminphase enthaltend das Amin, Wasser und den Alkohol;
    (D) Gewinnen der Polyole aus der Polyolphase; und
    (E) optional Gewinnen des Amins aus der Aminphase.

2. Verfahren nach Anspruch 1, bei welchem die Isocyanatkomponente ein Isocyanat ausgewählt aus Toluylendiisocyanat, den Di- und Polyisocyanaten der Diphenylmethanreihe, 1,5-Pentandiisocyanat, 1,6-Hexamethylen¬diisocyanat, Isophorondiisocyanat, Xylylendiisocyanat oder einer Mischung von zwei oder mehr der vorgenannten Isocyanate umfasst.

3. Verfahren nach Anspruch 2, bei welchem die Isocyanatkomponente Toluylendiisocyanat oder eine Mischung aus Toluylendiisocyanat und den Di- und Polyisocyanaten der Diphenylmethanreihe umfasst.

4. Verfahren nach Anspruch 3, bei welchem die Isocyanatkomponente Toluylendiisocyanat umfasst.

5. Verfahren nach Anspruch 4, bei welchem die Isocyanatkomponente neben Toluylendiisocyanat keine weiteren Isocyanate umfasst.

6. Verfahren nach einem der vorstehenden Ansprüche, bei welchem die Polyolkomponente ein Polyetherpolyol, ein Polyesterpolyol, ein Polyetherester-Polyol, ein Polyacrylatpolyol und/oder ein Polyethercarbonatpolyol umfasst.

7. Verfahren nach einem der vorstehenden Ansprüche, bei welchem die Polyolkomponente ein Styrol-Acrylnitril-Copolymergefülltes Polyetherpolyol umfasst.

8. Verfahren nach einem der vorstehenden Ansprüche, bei welchem der Alkohol ausgewählt ist aus Methanol, Ethanol, Ethylenglykol, Diethylenglykol, Propylenglykol, Dipropylenglykol, Methylglykol, Triethylenglykol, Glycerin, 2-Methyl-1,3-Propandiol oder einer Mischung von zwei oder mehr der vorgenannten Alkohole.

9. Verfahren nach einem der vorstehenden Ansprüche, bei welchem das Metallsalz ein Salz eines Alkalimetalls oder Erdalkalimetalls ist.

10. Verfahren nach einem der vorstehenden Ansprüche, bei welchem das Metallsalz ein Carbonat, ein Hydrogencarbonat, ein Mono-Hydrogen-Orthophosphat, ein Orthophosphat oder eine Mischung von zwei oder mehr der vorgenannten Metallsalze umfasst.

11. Verfahren nach Anspruch 10, bei welchem das Metallsalz nur eines der genannten Metallsalze umfasst.

12. Verfahren nach einem der vorstehenden Ansprüche, bei welchem die Masse des Katalysators 0,1 % bis 3,5 % der Masse des in Schritt (B) eingesetzten Polyurethanschaums beträgt.

13. Verfahren nach einem der vorstehenden Ansprüche,

    bei welchem Schritt (C) umfasst:
    Phasentrennung des ersten Produktgemisches in die Polyolphase und in die Aminphase;
    oder bei welchem Schritt (C) umfasst:
    Vermengen des ersten Produktgemisches mit einem organischen Lösungsmittel, das mit dem in Schritt (B) eingesetzten Alkohol nicht vollständig mischbar ist, und Phasentrennung in die Polyolphase und in die Aminphase;
    oder bei welchem bei welchem Schritt (C) umfasst:

    (C.I) Vermischen des in Schritt (B) erhaltenen ersten Produktgemisches mit einem organischen Lösungsmittel, das mit dem in Schritt (B) eingesetzten Alkohol *mischbar* ist, unter Erhalt eines zweiten Produktgemisches, und
    (C.II) Waschen des in Schritt (C.I) erhaltenen zweiten Produktgemisches mit einer wässrigen Waschflüssigkeit und Phasentrennung in die Aminphase und in die Polyolphase.

14. Verfahren nach einem der vorstehenden Ansprüche, bei welchem Schritt (D) eine Destillation und/oder Strippung mit einem Strippgas (wie insbesondere Stickstoff oder Wasserdampf, bevorzugt Stickstoff) umfasst.

15. Verfahren nach einem der vorstehenden Ansprüche, bei welchem Schritt (E) durchgeführt wird und eine destillative Abtrennung von Alkohol und Wasser aus der Aminphase umfasst, gefolgt von einer destillativen Reinigung des nach der destillativen Abtrennung verbleibenden Amins.

**Claims**

1. Process for recovering raw materials from polyurethane foams, comprising the steps of

    (A) providing a polyurethane foam based on an isocyanate component and a polyol component;
    (B) chemolysis of the polyurethane foam with an alcohol and water in the presence of a catalyst at a temperature in the range from 130°C to 195°C, wherein

        the mass ratio of alcohol and water on the one hand to the polyurethane foam on the other hand is in the range from 0.5 to 2.5 and
        the mass of the water is 4.0% to 10% of the mass of the alcohol,
        to obtain a first product mixture containing

an amine corresponding to an isocyanate of the isocyanate component,
polyols,
alcohol and
water,

wherein the catalyst comprises a metal salt selected from a carbonate, a hydrogencarbonate, an orthophosphate, a monohydrogen orthophosphate, a metaphosphate or a mixture of two or more of the aforementioned metal salts;

(C) working up the first product mixture to obtain a polyol phase containing the polyols and an amine phase containing the amine, water and the alcohol;
(D) recovering the polyols from the polyol phase; and
(E) optionally recovering the amine from the amine phase.

2. Process according to Claim 1, wherein the isocyanate component contains an isocyanate selected from tolylene diisocyanate, the di- and polyisocyanates of the diphenylmethane series, pentane 1,5-diisocyanate, hexamethylene 1,6-diisocyanate, isophorone diisocyanate, xylylene diisocyanate or a mixture of two or more of the aforementioned isocyanates.

3. Process according to Claim 2, wherein the isocyanate component comprises tolylene diisocyanate or a mixture of tolylene diisocyanate and the di- and polyisocyanates of the diphenylmethane series.

4. Process according to Claim 3, wherein the isocyanate component comprises tolylene diisocyanate.

5. Process according to Claim 4, wherein the isocyanate component comprises no further isocyanates in addition to tolylene diisocyanate.

6. Process according to any of the preceding claims, wherein the polyol component comprises a polyether polyol, a polyester polyol, a polyetherester polyol, a polyacrylate polyol and/or a polyethercarbonate polyol.

7. Process according to any of the preceding claims, wherein the polyol component comprises a styreneacrylonitrile copolymer-filled polyether polyol.

8. Process according to any of the preceding claims, wherein the alcohol is selected from methanol, ethanol, ethylene glycol, diethylene glycol, propylene glycol, dipropylene glycol, methyl glycol, triethylene glycol, glycerol, 2-methylpropane-1,3-diol or a mixture of two or more of the aforementioned alcohols.

9. Process according to any of the preceding claims, wherein the metal salt is a salt of an alkali metal or alkaline earth metal.

10. Process according to any of the preceding claims, wherein the metal salt comprises a carbonate, a hydrogencarbonate, a monohydrogen orthophosphate, an orthophosphate or a mixture of two or more of the aforementioned metal salts.

11. Process according to Claim 10, wherein the metal salt comprises only one of the recited metal salts.

12. Process according to any of the preceding claims, wherein the mass of the catalyst is 0.1% to 3.5% of the mass of the polyurethane foam employed in step (B).

13. Process according to any of the preceding claims, wherein step (C) comprises:
phase separation of the first product mixture into the polyol phase and into the amine phase;
or wherein step (C) comprises:

combining the first product mixture with an organic solvent that is not completely miscible with the alcohol employed in step (B) and phase separation into the polyol phase and into the amine phase;
or wherein step (C) comprises:

(C.I) mixing the first product mixture obtained in step (B) with an organic solvent that is *miscible* with the alcohol employed in step (B) to obtain a second product mixture and

(C.II) Washing the second product mixture obtained in step (C.I) with an aqueous washing liquid and phase separation into the amine phase and into the polyol phase.

14. Process according to any of the preceding claims, wherein step (D) comprises a distillation and/or stripping with a stripping gas (such as especially nitrogen or steam, preferably nitrogen).

15. Process according to any of the preceding claims, wherein step (E) is performed and comprises a distillative removal of alcohol and water from the amine phase followed by a distillative purification of the amine remaining after the distillative removal.

**Revendications**

1. Procédé de récupération de matières premières à partir de mousses de polyuréthane, comprenant les étapes :

(A) mise à disposition d'une mousse de polyuréthane à base d'un composant isocyanate et d'un composant polyol ;
(B) lyse chimique de la mousse de polyuréthane à l'aide d'un alcool et d'eau en présence d'un catalyseur à une température dans la plage de 130°C à 195°C,

le rapport massique d'alcool et d'eau d'une part à la mousse de polyuréthane d'autre part se situant dans la plage de 0,5 à 2,5 et
la masse de l'eau représentant 4,0% à 10% de la masse de l'alcool,
un premier mélange de produits étant obtenu qui contient

une amine qui correspond à un isocyanate du composant isocyanate,
des polyols,
de l'alcool et
de l'eau,

le catalyseur comprenant un sel métallique choisi parmi un carbonate, un hydrogénocarbonate, un orthophosphate, un mono-hydrogéno-orthophosphate, un métaphosphate ou un mélange de deux des sels métalliques susmentionnés ou plus ;

(C) traitement du premier mélange de produits avec obtention d'une phase de polyol contenant les polyols et d'une phase d'amine contenant l'amine, l'eau et l'alcool ;
(D) extraction des polyols à partir de la phase de polyol ; et
(E) éventuellement extraction de l'amine à partir de la phase d'amine.

2. Procédé selon la revendication 1, dans lequel le composant isocyanate comprend un isocyanate choisi parmi le diisocyanate de toluylène, les diisocyanates et polyisocyanates de la série du diphénylméthane, le 1,5-diisocyanate de pentane, le 1,6-diisocyanate d'hexaméthylène, le diisocyanate d'isophorone, le diisocyanate de xylylène ou un mélange de deux, ou plus, des isocyanates susmentionnés.

3. Procédé selon la revendication 2, dans lequel le composant isocyanate comprend du diisocyanate de toluylène ou un mélange de diisocyanate de toluylène et des diisocyanates et polyisocyanates de la série du diphénylméthane.

4. Procédé selon la revendication 3, dans lequel le composant isocyanate comprend du diisocyanate de toluylène.

5. Procédé selon la revendication 4, dans lequel le composant isocyanate, outre le diisocyanate de toluylène, ne comprend pas d'autres isocyanates.

6. Procédé selon l'une des revendications précédentes, dans lequel le composant polyol comprend un polyétherpolyol, un polyesterpolyol, un polyétheresterpolyol, un polyacrylatepolyol et/ou un polyéthercarbonatepolyol.

7. Procédé selon l'une des revendications précédentes, dans lequel le composant polyol comprend un polyétherpolyol chargé de copolymère de styrèneacrylonitrile.

**8.** Procédé selon l'une des revendications précédentes, dans lequel l'alcool est choisi parmi le méthanol, l'éthanol, l'éthylèneglycol, le diéthylèneglycol, le propylèneglycol, le dipropylèneglycol, le méthylglycol, le triéthylèneglycol, le glycérol, le 2-méthyl-1,3-propanediol ou un mélange de deux, ou plus, des alcools susmentionnés.

**9.** Procédé selon l'une des revendications précédentes, dans lequel le sel métallique est un sel de métal alcalin ou un sel de métal alcalino-terreux.

**10.** Procédé selon l'une des revendications précédentes, dans lequel le sel métallique comprend un carbonate, un hydrogénocarbonate, un mono-hydrogéno-orthophosphate, un orthophosphate, ou un mélange de deux, ou plus, des sels métalliques susmentionnés.

**11.** Procédé selon la revendication 10, dans lequel le sel métallique ne comprend qu'un des sels métalliques mentionnés.

**12.** Procédé selon l'une des revendications précédentes, dans lequel la masse du catalyseur représente 0,1% à 3,5% de la masse de la mousse de polyuréthane utilisée dans l'étape (B).

**13.** Procédé selon l'une des revendications précédentes, dans lequel l'étape (C) comprend :
une séparation des phases du premier mélange de produit en phase de polyol et phase d'amine ;

ou dans lequel l'étape (C) comprend :
le mélange du premier mélange de produits avec un solvant organique, qui n'est pas complètement miscible avec l'alcool utilisé dans l'étape (B) et une séparation des phases en phase de polyol et phase d'amine ;
ou dans lequel l'étape (C) comprend :

(C.I) le mélange du premier mélange de produits obtenu dans l'étape (B) avec un solvant organique, qui est complètement miscible avec l'alcool utilisé dans l'étape (B), avec obtention d'un deuxième mélange de produits et
(C.II) le lavage du deuxième mélange de produits obtenu dans l'étape (C.I) avec un liquide de lavage aqueux et une séparation des phases en phase d'amine et phase de polyol.

**14.** Procédé selon l'une des revendications précédentes, dans lequel l'étape (D) comprend une distillation et/ou une réextraction à l'aide d'un gaz de réextraction (tel qu'en particulier l'azote ou la vapeur d'eau, de préférence l'azote).

**15.** Procédé selon l'une des revendications précédentes, dans lequel l'étape (E) est réalisée et comprend une séparation par distillation d'alcool et d'eau à partir de la phase d'amine, suivie d'une purification par distillation de l'amine restant après la séparation par distillation.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4336406 A
- US 5714523 A
- EP 0835901 A2
- WO 2020260387 A1

**In der Beschreibung aufgeführte Nicht-Patentliteratur**

- **SIMÓN ; BORREGUERO ; LUCAS ; RODRÍGUEZ.** *Waste Management,* 2018, vol. 76, 147-171
- **BRASLAW ; GERLOCK.** *Ind. Eng. Chem. Process Des. Dev.,* 1984, vol. 23, 552-557